# EUROPEAN PATENT APPLICATION

(11) **EP 1 243 700 A1**
(43) Date of publication of application: **25.09.2002**
(21) Application number: 02076083.1
(22) Date of filing: 20.03.2002
(51) Int. Cl.: E02D 5/38, F24J 3/08

(54) **Method for manufacturing a concrete foundation pile having an internal fluid channel**

(30) Priority: 20.03.2001 NL 1017654
(71) Applicant: BETON SON B.V., NL-5692 CJ Son (NL)
(72) Inventor: Poot, Simon Jacob, 4247 EX Kedichem (NL)
(74) Representative: Prins, Adrianus Willem

(57) **Abstract**

A method for manufacturing a concrete foundation pile having an internal fluid channel extending in the longitudinal direction thereof, wherein a mold cavity is realized by driving, at the location where the foundation pile is to perform its supporting function, a hollow mold pipe (1) into the ground over the desired length of the foundation pile to be formed, which mold pipe (1) prior to being driven into the ground is closed off at a leading end by means of a foot element (4) which, after driving, is detachable from the mold pipe (1), in the hollow mold pipe reinforcement means and channel forming means (2) are positioned, wherein at least the channel forming means (2) are coupled to the foot element (4), the mold pipe (1) is filled with concrete from the top, and the mold pipe (1) is pulled from the ground again while the thus created space is filled by the concrete and the foot element (4) is left behind.

## Description

The invention relates to a method for manufacturing a concrete foundation pile with an internal fluid channel extending in the longitudinal direction thereof, wherein a mold cavity is provided for the foundation pile to be manufactured, reinforcement means and channel forming means are positioned in the mold cavity and the mold cavity is filled up with concrete, as known from DE-A-37 19 523.

With such a method, a foundation pile can be manufactured which in addition to its support function in a foundation construction can also be used as a heat exchanging body with which heat can be extracted from the ground around the foundation pile or can be stored therein. To that end, the fluid channel is connected to a circulation circuit in which a heat pump installation is included. Such foundation piles are also called energy piles.

For manufacturing such foundation piles, it is known to use a horizontal mold as a mold cavity in which the desired reinforcement and channel forming means are provided before the mold is filled with concrete. The reinforcement can be a longitudinal reinforcement and/or a spiral reinforcement and be placed in the mold at the desired locations over the desired length. The channel forming means consist of a hose which reaches from or from near the one end of the foundation pile to be formed to a point near the other end and which, after traversing a U-turn, extends uninterruptedly to the one end again.

Thus, a prefab foundation pile also to be used as energy pile is obtained, which is transported to the building site and can be inserted into the ground by pile driving. To be used as an energy pile, the U-shaped hose included in the foundation pile is to be connected to a circulation circuit.

It is noted that the use of a hose or pipe, disposed in a U-shape in the ground, as a heat exchanging body is known per se from DE-A-29 30 773. For providing the U-shaped hose in the ground, a hollow mold pipe, closed off by a lost foot element is driven into the ground over the desired length, while, prior to that, the U-shaped hose is coupled to the lost foot element. The mold pipe, leaving behind the foot element and the U-shaped hose is pulled from the ground, whereupon the space around the U-shaped hose is filled with a filling material. However, such a construction intended as a heat exchanger is neither intended nor suitable for any supporting function.

The invention contemplates manufacturing foundation piles of the energy pile type at the building site in the ground.

According to the invention, this is achieved with a method of the type described in the opening paragraph when
the mold cavity is effected by driving, over the desired length of the foundation pile to be formed, a hollow mold pipe into the ground at the location where the foundation pile is to perform its supporting function, which mold pipe, prior to being driven into the ground, is closed off at an end leading during driving, by means of a foot element which, after driving, is detachable from the mold pipe,
in the hollow mold pipe the reinforcement means and the channel forming means are positioned, while at least the channel forming means are coupled to the foot element,
the mold pipe is filled up from the top with the concrete, and
the mold pipe is pulled from the ground again while simultaneously the space thus created is filled by the concrete and the foot element is left behind.

With these features, in a suitable manner, at the building site, a foundation pile can be manufactured at the desired location and with exactly the desired length. In this context it should be noted that it is known per se to manufacture a foundation pile at the building site with the aid of a mold pipe which is provided at the bottom side with a detachable foot element, as well as the filling up and withdrawal of the mold pipe. However, here, solid foundation piles are concerned which are formed in the ground and which cannot be deployed as energy piles. However, just placing channel forming means before the mold pipe is filled up with concrete mortar does not yield the desired result. By filling up the mold cavity vertically in the longitudinal direction instead of horizontally, as in the known technique for forming prefab energy piles, the pourable, hardening material, for instance concrete mortar, which is considerably heavier per volume unit than the, in principle, hollow channel forming means, will push the channel forming means away and upwards. To prevent this a first supplementary step according to the invention has been taken, consisting of the application of provisions for keeping the channel forming means in place. Using the mold pipe to that end appears, at first sight, to be the proper way, were it not that the mold pipe has to be pulled from the ground again later. Another solution is to retain the channel forming means from above, which solution, however, in view of the space which has to be available at the top of the mold pipe for filling the pipe around the channel forming means, is complicated and, furthermore, loads the channel forming means. According to the invention, this problem is solved in a very suitable and advantageous manner by coupling the channel forming means with the foot element. Thus, this part which in the known technique is considered as a lost element, is integrated as an effective part in the construction to be formed. In particular, this solution is possible in that it is the very foot element that is held in its place by the same pouring material that tries to push the channel forming means upwards.

According to a further embodiment of the invention, it can be provided that the channel forming means are anchored to the foot element by locking means. In this manner, the channel forming means are actively retained. According to a different embodiment of the invention, it is also possible that the channel forming means are connected to the foot element such that no pourable, hardening materials can penetrate between the foot element and the channel forming means. Thus, in an effective manner, it is achieved that the concrete mortar cannot exert its buoyant action on the channel forming means. Naturally, that connection can be designed such that also an anchoring of the channel forming means to the foot element is realized.

Also, an indirect coupling between the channel forming means and the foot element is possible. This is, for instance, achieved in an advantageous manner when, according to a further embodiment of the invention, the channel forming means are fixedly connected to the reinforcement means which are anchored to the foot element by locking means.

Yet another manner of coupling between the foot element and the channel forming means is obtained when, according to a different embodiment of the invention, the channel forming means are weighted, whether or not temporarily, while it can further be preferred that the channel forming means are weighted with a weight which compensates the buoyant force occurring while pouring.

For thus forming a fluid channel in a foundation pile formed in the ground, according to a further embodiment of the invention, it is preferred that the channel forming means are formed by a core pipe and that the reinforcement means, viewed in cross section, are configured in a ring-shape, while the core pipe is placed within the ring-shaped configured reinforcement means.

By coupling the channel forming means to the foot element, it is not only possible to keep the channel forming means in place in longitudinal direction, but also in cross direction. This latter alignment can be further optimized when guiding means are arranged, with which the core pipe, when it is brought into the mold pipe, can be brought and held at the desired location.

According to a further embodiment of the invention, as a core pipe, a plastic pipe can be considered. However, it is also possible that, to that end, a prefab, reinforced concrete pile with a preformed cavity is used.

Another possibility for creating a fluid circuit in the foundation pile is obtained when as a channel forming means at least one hose is used which is bent in a U-shape and, with the two U-legs directed upwards, is brought into the mold pipe to a point adjacent the foot element, while, for keeping the hose in the desired position over the length of the foundation pile, it is further preferred that the at least one hose is anchored to the reinforcement means before these are brought into the mold pipe.

With reference to embodiments represented in the drawing, the method according to the invention will presently be further discussed, albeit exclusively as non-limitative examples. In the drawing:
Figs. 1a - 1e show the steps to be successively taken in a first embodiment of the method according to the invention;
Figs. 2a - 2d show steps to be successively taken in a second embodiment of the method according to the invention, and
Figs. 3a - c show a third variant embodiment of the method according to the invention.

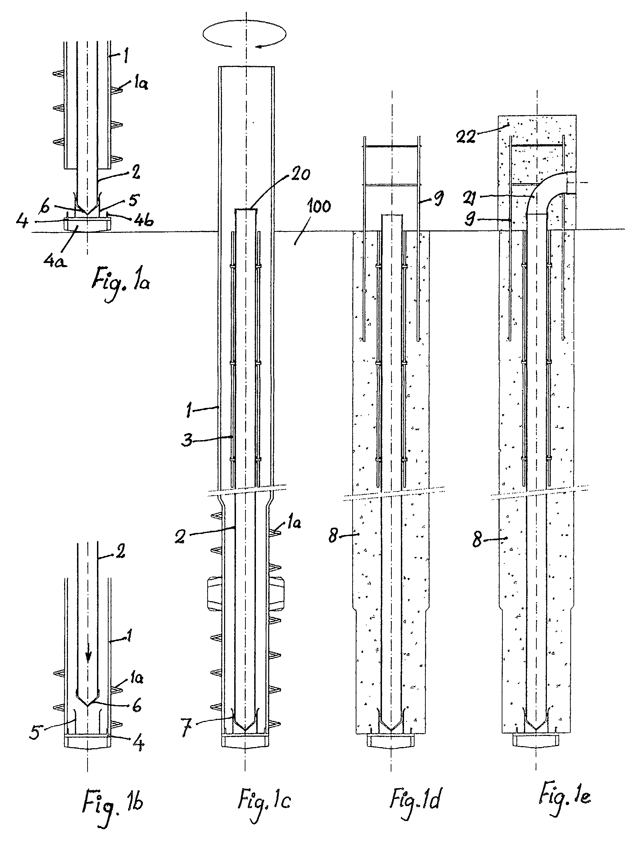

In Fig. 1a, the lower extremity of a mold pipe 1 is represented which is provided at its outer surface with a screw thread 1a, which indicates that the mold pipe 1 is brought into and out of the ground in a rotating manner. Concentrically within the mold pipe 1, a core pipe 2 is placed, which is closed off at its bottom side with a pilot cover 6 tapering to a point, which engages in a centering collar 5 which is connected to a foot element 4, which lies at the ground level of a ground 10 and is provided at its bottom side with a digging blade of S-shaped design. Outside the centering collar 5, on the top side of the foot element 4, a connecting collar 4b is fitted, which can effect a coupling between the mold pipe and the foot element 4. In Fig. 1a, the mold pipe 1 is disposed at a distance from the foot element 4. In this manner, the realization of a coupling between the foot element 4 and the core pipe 2 through penetration by the core pipe 2, closed off at its bottom side with the pilot cover 6, into the centering collar 5 can be optimally observed and controlled. If desired, the core pipe 2 and the foot element 4 can mutually be fixedly connected via the centering collar 5 and/or the pilot cover 6 in a manner such that the core pipe 2, while it can turn relative to that foot element, cannot move in vertical direction relative to it. After the coupling between the core pipe 2 and the foot element 4 has been realized in this manner, the mold pipe 1 is brought down and, via the connecting collar 4b, coupled to the foot element 4. This coupling is effected such that, upon rotation of the mold pipe 1, the foot element 4 is taken along in a rotating manner, but that, when the mold pipe 1 is moved upwards, the coupling is disconnected.

After coupling the mold pipe 1 to the foot element 4, the mold pipe 1 is brought into rotation, so that, supported if necessary by a load exerted on the top, it is rotated into the ground, forcing the ground aside for forming a cavity in the ground 10. Driving the mold pipe 1 thus into the ground 10 proceeds until the desired depth has been reached, which situation is represented in Fig. 1b. There, the pilot cover 6 is located at a distance from the centering collar 5, thereby indicating that placing the core pipe 2 into the mold pipe 1 does not need to take place before starting to drive the mold pipe 1 into the ground, but that it can also take place later, for instance after the mold pipe 1 has been driven into the ground to the desired depth. In that case, the centering collar 5 and the pilot cover 6, tapering to a point, will form guiding means which automatically effect the desired coupling of the core pipe 2 to the foot element 4. If desired, a locking between the parts can be realized by means (not shown) suitable to that end, such as a ring which slides over cams tapering at the top end and which spring back after the ring has passed.

In Fig. 1c, the situation is represented where driving the mold pipe 1 into the ground 10 and inserting the core pipe 2 as well as the realization of a coupling 7 between the core pipe 2 and the foot element 2 has ended. In Fig. 1c, it is also indicated that over the part which is provided at the outer side with the thread 1a, the mold pipe 1 has a smaller diameter than the part located thereabove. Further, in Fig. 1c, a longitudinal reinforcement 3 has been placed around the core pipe 2, which, if desired, can reach onto or adjacent the foot element 4. This longitudinal reinforcement 3 can also be placed in the mold pipe 1 simultaneously with the core pipe 2 before the start of the mold pipe 1 being driven into the ground. Other possibilities are simultaneous placement together with the core pipe 2 after driving and sliding it around the core pipe 2 after this has been driven into the ground together with the mold pipe 1.

When the position represented in Fig. 1c has been achieved, the filling material 8, for instance concrete mortar, is poured into the mold pipe 1. To prevent the filling material from ending up in the core pipe 2, this has temporarily been closed off by a cover 20. The first filling material 8 comes to lie on the foot element 4 around the centering collar 5, while the connection of that collar to the core pipe 2 prevents filling material 8 from penetrating under the pilot cover, which, upon further filling of the mold pipe, results in a buoyant force on the core pipe 2 which is hollow, closed and hence has a relatively limited mass.

After the mold pipe 1 has been filled with filling material 8 over at least a part of its length, the mold pipe 1 is pulled by rotating it in a direction contrary to the rotation during driving. Upon the upward displacement of the mold pipe 1 thus caused, the latter comes loose from the foot element 4. Then, again, the direction of rotation is set equal to the direction of turning-in while increasing the pull force. Upon thus retracting the mold pipe 1, a space between the ground 10 and the already poured filling material 8 becomes vacant, which space is directly filled by the filling material 8 expanding to that end. Therefore, the foundation pile formed obtains a diameter which is equal to that of the outer diameter of the screw thread on the mold pipe 1, which is apparent from a comparison of Figs. 1c and 1d, which latter Figure shows the foundation pile formed after the complete withdrawal of the mold pipe 1. Fig. 1d further shows a supplementary reinforcement 9 pushed into the filling material 8, with which further parts of a foundation construction to be formed can be connected to the foundation pile, such as a foundation beam 22 shown in Fig. 1e.

Fig. 1e also shows how the core pipe 2, also after completion of the foundation construction, remains accessible so that the foundation pile can also be used as an energy pile. To that end, before forming the foundation beam 22, the core pipe is connected to a knee bend 21, which, after completion of the foundation beam 22, terminates in the side face thereof.

Deploying a thus formed foundation pile as an energy pile can for instance be realized by inserting two hoses via the knee bend 21 into the core pipe 2, one of which, serving as an inlet, terminates at the location of the bottom end of the core pipe 2 and the other, serving as an outlet, terminates at the level of the upper end of the core pipe 2. By connecting both hoses to a circulation circuit, a flow can thus be generated in the core pipe, so that the foundation pile will act as a heat exchanging body between the fluid in the core pipe and the ground around the foundation pile.

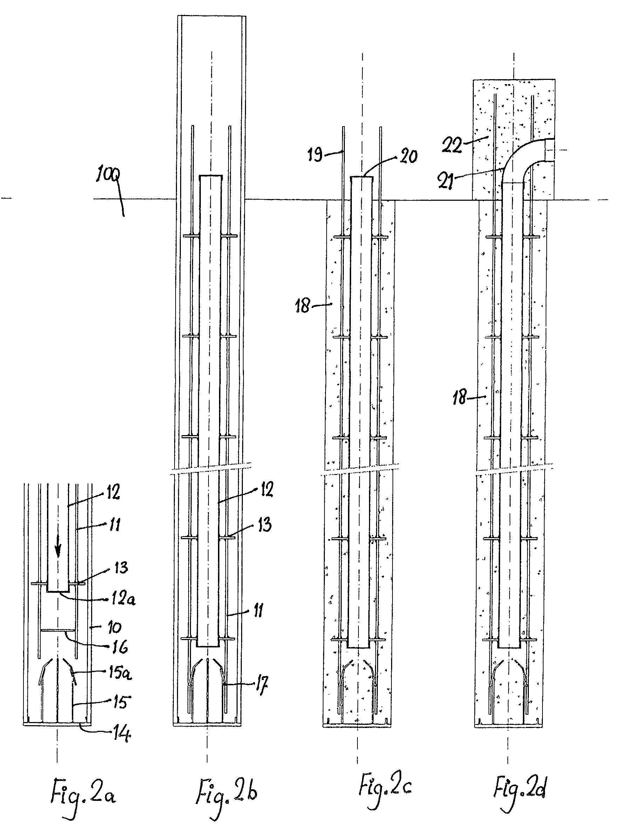

In Fig. 2a, a mold pipe 10 is represented, which is closed off by a detachable foot element 14 and has been driven into the ground, e.g. by driving or vibrating. On the foot element 14, upwardly reaching anchoring elements 15 with resilient strips 15a have been attached. A core pipe 12 to be placed in the mold pipe 10 is closed off at the bottom side by a cover 12a and is positioned within a longitudinal reinforcement 11 also to be placed in the mold pipe 10, while the core pipe 12 is rigidly connected to the longitudinal reinforcement 11 by attachment elements 13. Adjacent the bottom end of the longitudinal reinforcement 11, a ring 16 connected thereto has been disposed, which, together with the longitudinal reinforcement 11 can be shifted over the anchoring elements 5 with resilient strips 15a. During this shifting, the lower extremities of the resilient strips will be pushed to the anchoring elements 15 by the ring 16, so that the ring 16 can pass. When the ring 16 is beyond the lower extremities of the resilient strips 15a, these strips spring back and thus form, as shown in Fig. 2b, a locking 17 against the pulling up beyond the anchoring member 15 of the longitudinal reinforcement 11 and, hence, of the core pipe 12 attached thereto. Thus, the core pipe 12 is locked against a buoyant force via an indirect anchoring to the foot element 14 by the locking 17.

After this situation, shown in Fig. 2b, has been achieved, the pouring of filling material in the mold pipe 10 is started, while the core pipe 12 is temporarily closed off with a cover 20. After filling the mold pipe 10 at least over a particular height under and around the core pipe 12, the withdrawal of the mold pipe 10 is started, whereby the foot element 14 remains behind in the ground 10 and the space created between the ground 10 and the filling material 18 by pulling up the mold pipe is filled by the filling material. The foundation pile obtained after completion of the pouring and withdrawal of the mold pipe 10 is represented in Fig. 2c. By subsequently, as shown in Fig. 2d, placing a knee bend 21 and casting-on a foundation beam 22, the foundation pile, prepared for use as an energy pile, can be integrated in a foundation construction.

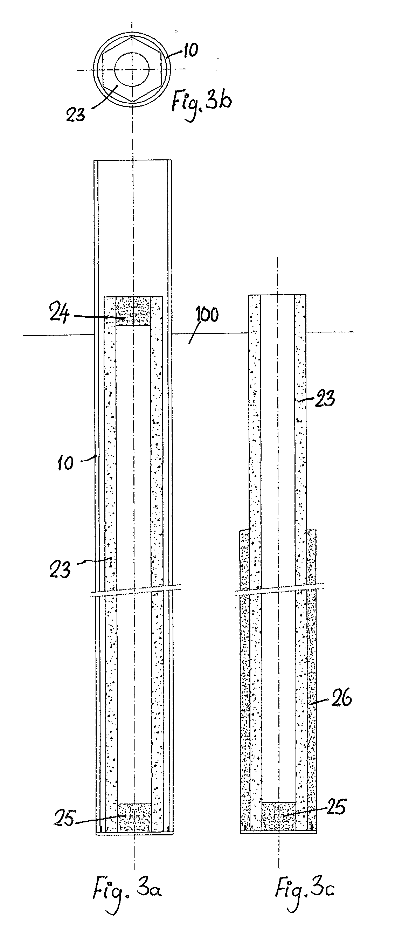

In the exemplary embodiments of the method of according to the invention described hereinabove, the core pipe will be a relatively light construction element, such as, for instance, a plastic pipe. In the embodiment according to Fig. 3a, in the mold pipe 10 driven into the ground 100 instead of a core pipe 12 with longitudinal reinforcement 11, as in Fig. 2b, a prefab hollow concrete shaft 23 with a multi-angular outer circumference as shown in fig. 3b has been placed. The shaft 23 is closed off at the top by a plug 24 and at the bottom side by a plug 25. Coupling this hollow shaft to the foot element 14 initially takes place by the weight of the hollow shaft 23, supported, if desired, by supplementary disposed weights in or on the core pipe for centering the hollow shaft 23.

After placing the shaft 23, as shown in Fig. 3a, pouring filling material 26 in the mold pipe 10 is begun, followed by withdrawing the mold pipe, while the space formed by pulling the mold pipe is taken up by settling of the filling material 26. As the hollow shaft 23, which can be provided with a longitudinal reinforcement, can already be, in itself, a body with sufficient form stability and bearing force, it is possible, in this embodiment of the invention, to end the pouring of the filling material 26 before the upper surface thereof reaches the surface of the ground 10, so that a foundation pile with a thickened bottom end can be formed, as represented in Fig. 3c, where, furthermore, the plug 24 has been removed from the top end of the shaft 23. In this situation, the weight of the hollow shaft is sufficient to prevent floating. When pouring filling material 26 to the surface of the ground 10, centering of the hollow shaft 23 on the foot element 14 can take place while elements (not shown) in a manner similar to that shown in Fig. 1c screen the bottom end of the shaft 23, so that no filling material can end up under the shaft to form an upward buoyant force. Another possibility is applying a compressible material to the bottom side of the hollow shaft 23, so that, although it rests directly on the foot element 14, no filling material can end up beneath it.

Thereupon, in a manner as represented in, for instance, Fig. 2d, a foundation beam can be disposed having therein a laterally terminating channel for, if desired, supplementary use of the foundation pile as an energy pile.

It will be understood that within the framework of the invention as laid down in the accompanying claims, many other modifications and variants are possible. For instance, in the embodiment according to Figs. 2a - 2d, the core pipe connected to the longitudinal reinforcement may be replaced with at least one hose which extends from the top down and, after traversing a U-turn adjacent the foot element, extends uninterruptedly upwards again, while the two upper ends of the hose are connected to a fluid circulation circuit. Further, apart from the coupling variants between the channel forming means and the foot element discussed, many other manners of coupling are possible. A relatively light core pipe can, if desired, be weighted, for instance by placing a weight therein for compensating any buoyant force occurring during pouring of filling material.. Further, instead of a core pipe disposed concentrically in the mold pipe, a duo pipe coupled at the bottom side may be opted for, while, also, combinations of hoses and pipes are possible.

## Claims

1. A method for manufacturing a concrete foundation pile having an interior fluid channel extending in the longitudinal direction thereof, wherein a mold cavity is provided for the foundation pile to be manufactured, reinforcement means and channel forming means are positioned in the mold cavity, and the mold cavity is filled up with concrete, **characterized in that**
the mold cavity is realized by driving, at the location where the foundation pile is to perform its supporting function, a hollow mold pipe into the ground over the desired length of the foundation pile to be formed, which mold pipe, prior to being driven into the ground, is closed off at an end leading during driving, by means of a foot element which, after driving, is detachable from the mold pipe,
in the hollow mold pipe, the reinforcement means and the channel forming means are positioned, while at least the channel forming means are coupled to the foot element,
the mold pipe is filled from the top with the concrete, and
the mold pipe is pulled from the ground again while simultaneously the space thus created is filled by the concrete and the foot element is left behind.

2. A method according to claim 1, **characterized in that** the channel forming means are anchored to the foot element by locking means.

3. A method according to claim 1 or 2, **characterized in that** the channel forming means are connected to the foot element such that no concrete can penetrate between the foot element and the channel forming means.

4. A method according to any one of the preceding claims, **characterized in that** the channel forming means are fixedly connected with the reinforcement means, which are anchored to the foot element by locking means.

5. A method according to any one of the preceding claims, **characterized in that** the channel forming means are weighted, whether or not temporarily.

6. A method according to claim 5, **characterized in that** the channel forming means are weighted with a weight which compensates the buoyant force occurring during pouring.

7. A method according to any one of the preceding claims, **characterized in that** the channel forming means are formed by a core pipe and the reinforcement means, viewed in cross section, are configured in a ring-shaped manner, wherein the core pipe is placed within the ring-shaped configured reinforcement means.

8. A method according to claim 7, **characterized in that** guiding means are disposed with which the core pipe during insertion in the mold pipe is brought and held at the desired location.

9. A method according to claim 7 or 8, **characterized in that** as a core pipe a plastic pipe is used.

10. A method according to claim 7 or 8, **characterized in that** as core pipe a prefab, reinforced concrete pile with a pre-formed cavity is used.

11. A method according to any one of claims 1-6, **characterized in that** as channel forming means at least one hose is used, which is bent in a U-shaped manner and, with its two U-legs directed upwards, is brought into the mold pipe near the foot element.

12. A method according to claim 11, **characterized in that** the at least one hose is anchored to the reinforcement means prior to their being brought into the mold pipe.
